# EUROPÄISCHE PATENTSCHRIFT

(11) **EP 1 013 946 B1**
(45) Veröffentlichungstag und Bekanntmachung des Hinweises auf die Patenterteilung: **18.12.2002**
(21) Anmeldenummer: 99124264.5
(22) Anmeldetag: 04.12.1999
(51) Int. Cl.: F16B 39/30, B60K 26/00

(54) **Schraubverbindung für ein Fahrpedalmodul eines Kraftfahrzeugs**
Threaded connection for a motor vehicle accelerator pedal module
Dispositif de fixation taraudé pour un module pedale d'accelerateur d'un véhicule à moteur

(30) Priorität: 11.12.1998 DE 19857225
(43) Veröffentlichungstag der Anmeldung: 28.06.2000
(73) Patentinhaber: ROBERT BOSCH GMBH, 70442 Stuttgart (DE); Tucker GmbH, D-6300 Giessen (DE); DaimlerChrysler AG, 70546 Stuttgart (DE)
(72) Erfinder: Velte, Uwe, 77833 Ottersweier (DE); Pierenkemper, Rolf, 77830 Buehlertal (DE); Barnewald, Andreas, 64331 Darmstadt-Weiterstadt (DE); Koehler, Sigrid, 70176 Stuttgart (DE); Kuehnl, Walter, 35325 Mücke-Nieder-Ohmen (DE); Lautner, Siegfried, 73529 Schwäbisch-Gmünd (DE); Michalski, Ralph, 71735 Eberdingen/Hochdorf (DE); Saltenberger, Reimar, 35641 Schöffengrund-Niederwetz (DE)
(74) Vertreter: Knetsch, Manfred

(56) Entgegenhaltungen:
- DE-A- 2 903 845
- FR-A- 1 343 518
- GB-A- 2 290 593
- US-A- 4 358 098
- US-A- 5 340 253
- PATENT ABSTRACTS OF JAPAN vol. 018, no. 314 (M-1621), 15. Juni 1994 (1994-06-15) & JP 06 066309 A (SANKOO KK), 8. März 1994 (1994-03-08)

## Beschreibung

### Stand der Technik

Die Erfindung geht aus von einer Schraubverbindung für ein Fahrpedalmodul eines Kraftfahrzeugs nach der Gattung des Anspruchs 1 oder des Anspruchs 3.

Das Fahrpedalmodul dient zum Steuern der Fahrgeschwindigkeit eines Kraftfahrzeugs. Das Fahrpedalmodul ist üblicherweise im Fußbereich eines Fahrzeugführers an der Karosserie des Kraftfahrzeugs befestigt. Das Fahrpedalmodul hat ein vom Fuß des Fahrzeugführers betätigbares Pedal. Üblicherweise gibt es beim Fahrpedalmodul noch einen Sensor, der, je nach Betätigung des Pedals, elektrische Signale an eine die Fahrgeschwindigkeit des Kraftfahrzeugs steuernde Steuereinrichtung übermittelt.

Bisher schon wurde das Fahrpedalmodul beispielsweise mittels eines an der Karosserie des Kraftfahrzeugs gehaltenen, ein Außengewinde aufweisenden Gewindebolzens an der Karosserie befestigt. Das Fahrpedalmodul kann beispielsweise am Fahrzeugboden oder an einer aufrechten Wand des Fahrgastraums befestigt werden. Am Fahrpedalmodul gibt es ein entsprechendes Loch, durch das der an der Karosserie befestigte Gewindebolzen gesteckt wird. Anschließend wird eine Befestigungsmutter auf den Gewindebolzen geschraubt. Die Befestigungsmutter fixiert das Fahrpedalmodul an der Karosserie. Der Gewindebolzen kann auch als Schraube bezeichnet werden. Nachfolgend wird der Gewindebolzen als Bolzen und die Befestigungsmutter als Mutter bezeichnet.

Damit sich die Mutter nicht unbeabsichtigt von dem Bolzen löst, muß normalerweise dafür gesorgt werden, daß während der gesamten Benutzungsdauer des Fahrpedalmoduls in dem Bolzen eine ausreichend große Vorspannung vorhanden ist.

Statt dessen bzw. zusätzlich besteht auch die Möglichkeit, daß man die Mutter aus plastisch verformbarem Material, beispielsweise aus Stahl, herstellt und die Mutter vor dem Aufschrauben radial leicht plastisch deformiert, so daß die Mutter beispielsweise eine ovale Form bekommt, damit die Mutter auf dem Bolzen klemmt und dadurch ein unbeabsichtigtes Lösen verhindert wird.

Eine weitere Sicherungsmöglichkeit besteht darin, daß man die Mutter beispielsweise aus Kunststoff fertigt und nicht mit einem Innengewinde, sondern statt dessen mit einem glatten zylindrischen Loch versieht, wobei der Durchmesser des Lochs deutlich kleiner ist als der Außendurchmesser des Außengewindes des Bolzens. Dadurch entstehen jedoch beim Anbauen des Fahrpedalmoduls an die Karosserie erhebliche Probleme, weil durch das Hineinschneiden des Gewindes des Bolzens in die aus Kunststoff bestehende Mutter bei zügiger Montage erhebliche Wärme entsteht, so daß der Kunststoff zu fließen beginnt und das ordnungsgemäße Festziehen der Mutter auf dem Bolzen nicht ausreichend und durch Messung der Drehmomente nicht genau genug überwacht werden kann. Das Drehmoment während des Aufschraubens der Mutter auf den Bolzen ist bei dieser Lösung ziemlich groß. Dadurch ist der Abstand zum Überdrehmoment, bei dem eine Schädigung der Verbindung auftritt, unter Mitberücksichtigung nie ganz vermeidbarer Toleranzen, zu klein. Dadurch besteht bei einer Automatisierung des Schraubvorgangs die Gefahr, daß eine Schädigung des Gewindes der Mutter auftritt, bevor die automatische Abschaltung den Aufschraubvorgang beendet. Ein weiterer Nachteil bei dieser Lösung ist, daß der Flankenwinkel des Gewindes des Bolzens ziemlich spitz, beispielsweise 30°, gemacht werden muß. Dies bedeutet, daß für den Bolzen kein für standardmäßige Verschraubungen handelsüblich genormtes Gewinde verwendet werden kann und daß das Gewinde gegenüber Beschädigungen besonders empfindlich ist.

Die GB-A-2 290 593 zeigt eine Mutter für eine Schraubverbindung. Die Mutter besteht aus einem Gehäuse und einem in das Gehäuse eingeschlossenen weichen Material mit einem in Achsrichtung betrachtet konisch zulaufenden Innengewinde. Aufgrund der Konizität des Gewindes der Mutter, kann dieselbe Muttergröße als Notbehelf für unterschiedliche Schrauben mit unterschiedlichen Gewindeabmessungen verwendet werden, wobei die Gewindeabmessungen der Schrauben nicht bekannt sein müssen.

Die deutsche offenlegungsschrift DE 29 03 845 A1 zeigt unterschiedliche Ausführungen einer Schraubverbindung mit nicht ganz vollständig geschnittenem Gewinde. Die dort gezeigten Ausführungen haben jedoch den Nachteil, daß der Flankenwinkel des Innengewindes der Mutter und der Flankenwinkel des Außengewindes des Bolzens unterschiedlich sein müssen, damit die Verformung der Gewindespitzen des Außengewindes des Bolzens, die beim Zusammenschrauben verformt werden, während des Festschraubens nicht zu einem Festfressen zwischen dem Bolzen und der Mutter führt. Durch diese unterschiedlichen Flankenwinkel wird die Haltbarkeit der Schraubverbindung jedoch deutlich reduziert. Zusätzlich wird durch die Verformung der Gewindespitzen die Breite der tragenden Flanke wesentlich reduziert. Die tragende Flanke ist die Flanke eines Gewindes, welche die auf die Gewindeverbindung in Axialrichtung wirkende Kraft aufnimmt.

### Vorteile der Erfindung

Die erfindungsgemäße Schraubverbindung für ein Fahrpedalmodul eines .Kraftfahrzeugs mit den kennzeichnenden Merkmalen des Anspruchs 1 bzw. des Anspruchs 3 hat demgegenüber den Vorteil, daß die Mutter, die vorzugsweise aus Kunststoff besteht, in einem Arbeitsgang schnell und prozeßsicher montiert werden kann. Durch das teilweise vorgeformte Innengewinde, das nicht spielfrei ausgelegt ist, kann die Mutter mit einem relativ kleinen Eindrehmoment (Furchmoment) und hoher Schrauberdrehzahl aufgeschraubt werden und dadurch, daß zum Überdrehmoment ein großer Abstand vorhanden ist, kann die Mutter prozeßsicher angezogen werden. Bei automatischen Anschraubvorgängen hat das Eindrehmoment bzw. das Anzugsdrehmoment, einschließlich aller Toleranzen, vorteilhafterweise einen sicheren Abstand zum Überdrehmoment.

Weil auch bei schnellem Aufschrauben relativ wenig Erwärmung auftritt, besteht ein weiterer Vorteil darin, daß keine Abkühlzeit abgewartet werden muß, bevor die Mutter mit dem vorgesehenen End-Drehmoment festgezogen werden kann.

Durch die teilweise Vorformung des Innengewindes der Mutter wird das Eindrehmoment auf vorteilhafte Weise weit genug herabgesetzt, damit nicht zuviel Wärme während des Eindrehens erzeugt wird. Dadurch wird ein Fließen des Kunststoffs verhindert, und der Abstand zwischen dem Eindrehmoment und dem Überdrehmoment ist ausreichend groß.

Ein weiterer Vorteil ist, daß beim Eindrehen der Mutter auf den Bolzen das Gewinde des Bolzens nicht übermäßig beansprucht wird, was den Vorteil hat, daß das Gewinde des Bolzens nicht gehärtet werden muß und dadurch beispielsweise ein Festschweißen des Bolzens an einem Untergrund bzw. an der Karosserie leicht möglich ist. Ein weiterer Vorteil ist, daß das Eindrehmoment so klein gehalten werden kann, daß das Gewinde des Bolzens nicht gehärtet werden muß und trotzdem eine Beschädigung der Gewindespitzen vermieden wird. Ein weiterer Vorteil ist, daß der Flankenwinkel des Gewindes des Bolzens auch relativ groß gewählt werden kann. Deshalb kann der Bolzen vorteilhafterweise auch mit einem für übliche Verschraubungen standardmäßig genormten Gewinde mit normalem Flankenwinkel versehen werden. Der Flankenwinkel kann beispielsweise 60° betragen.

Durch die in den Unteransprüchen aufgeführten Maßnahmen sind vorteilhafte Weiterbildungen und Verbesserungen der in den Hauptansprüchen angegebenen Schraubverbindung möglich.

Mit Hilfe der Clipverbindung entsteht der Vorteil, daß die Mutter verliersicher mit dem Fahrpedalmodul verbunden werden kann, bevor das Fahrpedalmodul an der Karosserie befestigt wird. Dadurch kann vorteilhafterweise bereits der Hersteller des Fahrpedalmoduls das Fahrpedalmodul mit der Mutter ausrüsten.

Besteht die Mutter aus Kunststoff, so hat man den Vorteil, daß auch nach einem relativ starken Setzen der zu verschraubenden Bauteile eine axiale Vorspannung erhalten bleibt.

### Zeichnung

Bevorzugt ausgewählte, besonders vorteilhafte Ausführungsbeispiele der Erfindung sind in der Zeichnung vereinfacht dargestellt und in der nachfolgenden Beschreibung näher erläutert. Es zeigen die Figur 1 einen Ausschnitt des Fahrpedalmoduls, die Figuren 2 und 3 verschiedene Ansichten der Mutter und die Figur 4 Einzelheiten des Innengewindes der Mutter und des Außengewindes des Bolzens.

### Beschreibung des Ausführungsbeispiels

Die Schraubverbindung dient zum Befestigen eines Fahrpedalmoduls an einer Karosserie eines Kraftfahrzeugs. Das Fahrpedalmodul umfaßt mindestens ein fußbetätigbares Pedal. Durch Betätigen des Pedals kann die Fahrgeschwindigkeit des Kraftfahrzeugs gesteuert werden. Das Pedal ist beispielsweise ein Gaspedal und das Fahrpedalmodul umfaßt beispielsweise auch noch einen Sensor, mit dem die Stellung des Pedals erfaßt werden kann. Der Sensor liefert elektrische Signale an eine Steuereinrichtung zum Steuern der Fahrgeschwindigkeit des Kraftfahrzeugs, insbesondere zum Steuern der Leistung der Antriebsmaschine des Kraftfahrzeugs.

Die Schraubverbindung umfaßt einen Bolzen und eine Mutter. Der Bolzen hat ein Außengewinde und die Mutter hat ein Innengewinde. Der Bolzen ist beispielsweise an der Karosserie befestigt, und die Mutter hält das Fahrpedalmodul, wobei die Mutter eine Schlüsselfläche hat, über die mit Hilfe eines Werkzeugs die Mutter während des Verschraubens gedreht wird. Es ist aber auch beispielsweise möglich, daß sich die Mutter an der Karosserie und der Bolzen beispielsweise über eine Schulter an dem Fahrpedalmodul abstützen. In diesem Fall wird während des Verschraubens beispielsweise der Bolzen mit Hilfe eines Werkzeugs gedreht. Je nachdem was geschickter ist, geschieht die Verschraubung durch Drehen des Bolzens oder durch Drehen der Mutter.

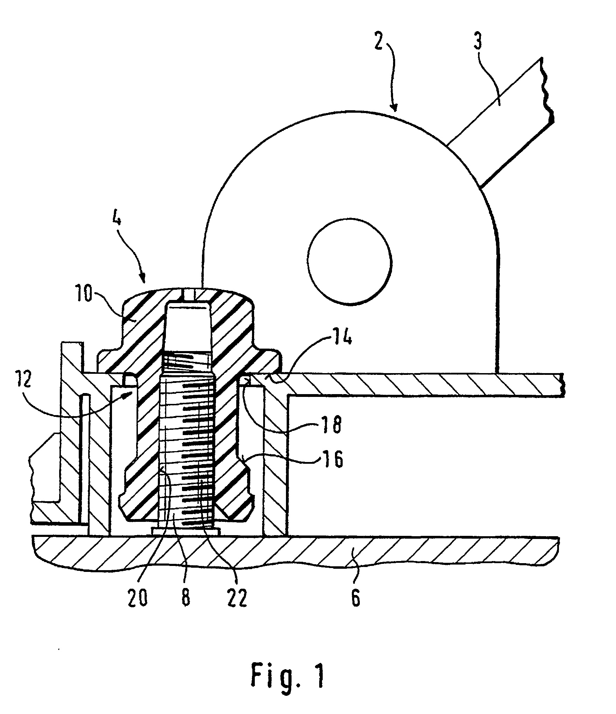

Die **Figur 1** zeigt ein bevorzugt ausgewähltes, besonders vorteilhaftes Ausführungsbeispiel.

In der Figur 1 ist ein Ausschnitt eines Fahrpedalmoduls 2 dargestellt. Teile des Fahrpedalmoduls 2 sind der besseren Übersichtlichkeit wegen in der Figur 1 nicht dargestellt. Das Fahrpedalmodul 2 umfaßt ein an dem Fahrpedalmodul 2 schwenkbar gelagertes Pedal 3. Von dem Pedal 3 ist aus Platzgründen nur ein Abschnitt gezeigt. Die Figur 1 zeigt eine Schraubverbindung 4 zum Befestigen des Fahrpedalmoduls 2 an einer Karosserie 6 eines Kraftfahrzeugs. Das Fahrpedalmodul 2 wird üblicherweise mit mehreren, vorzugsweise mit vier Schraubverbindungen 4 an der Karosserie 6 befestigt. Der besseren Übersichtlichkeit wegen ist davon nur die eine Schraubverbindung 4 dargestellt, wobei die nicht dargestellten Schraubverbindungen 4 vorzugsweise gleich wie die abgebildete Schraubverbindung 4 ausgeführt sind.

Die Schraubverbindung 4 umfaßt einen Bolzen 8 und eine Mutter 10. Der Bolzen 8 ist beispielsweise an der Karosserie 6 festgeschweißt.

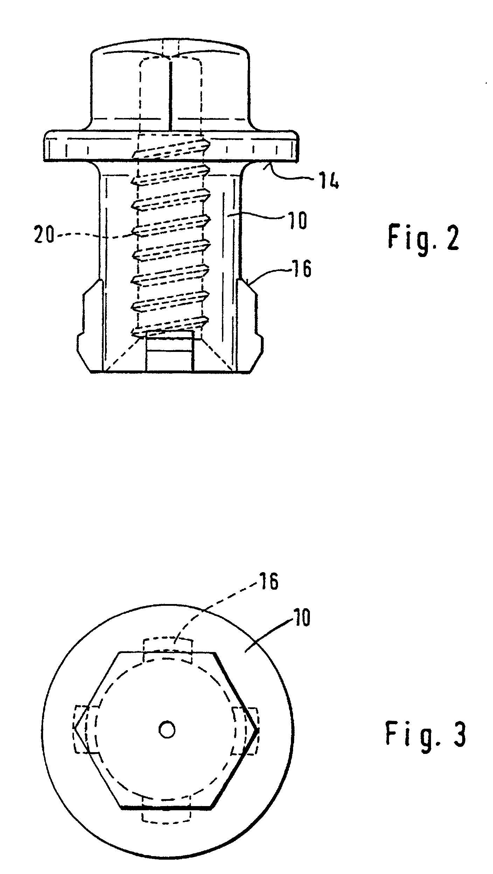

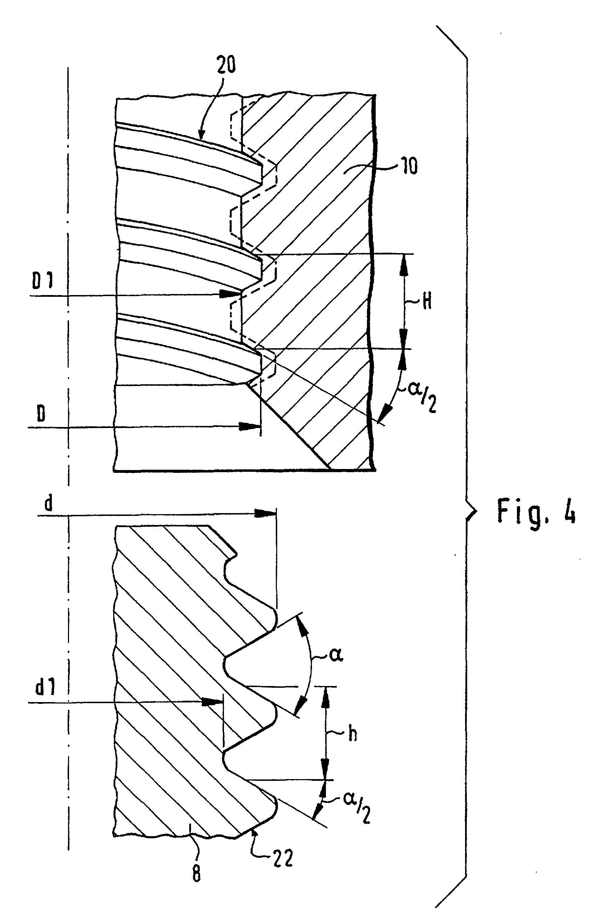

Die **Figuren 2 und 3** zeigen die Mutter 10 als Einzelheit. In der Figur 2 ist eine Seitenansicht und in der **Figur 3** eine Draufsicht der Mutter 10 dargestellt. Die Figur 4 zeigt einen Ausschnitt des Bolzens 8 und der Mutter 10, im Zustand, bevor diese beiden Teile 8 und 10 miteinander verschraubt werden.

In allen Figuren sind gleiche oder gleichwirkende Teile mit denselben Bezugszeichen versehen. Sofern nichts Gegenteiliges erwähnt bzw. in der Zeichnung dargestellt ist, gilt das anhand eines der Figuren Erwähnte und Dargestellte auch bei den anderen Figuren.

Zwischen dem Fahrpedalmodul 2 und der Mutter 10 ist eine Clipverbindung 12 vorgesehen. Die Clipverbindung 12 wird dadurch gebildet, daß die Mutter 10 eine Haltefläche 14 und eine oder mehrere über den Umfang verteilte Rückhalteflächen 16 hat. An dem Fahrpedalmodul 2 ist eine Öffnung 18 vorgesehen. Der Außendurchmesser an den Außenseiten der Rückhalteflächen 16 der Mutter 10 ist so dimensioniert, daß die Mutter 10 mit den Rückhalteflächen 16 durch die Öffnung 18 hindurchgedrückt werden kann. Während des Hindurchdrückens verformt sich die Mutter 10 im Bereich der Rückhaltefläche 16 elastisch und weitet sich dann nach dem Hindurchdrücken wieder aus, so daß die Rückhalteflächen 16 nicht durch die Öffnung 18 hindurchfallen können. Auf der anderen Seite der Öffnung 18 wird die Mutter 10 über die Haltefläche 14, die einen wesentlich größeren Durchmesser als die Öffnung 18 hat, in der Öffnung 18 des Fahrpedalmoduls 2 gehalten. In axialer Richtung ist der Abstand zwischen der Haltefläche 14 und der Rückhaltefläche 16 so reichlich, daß das Verschrauben der Mutter 10 mit dem Bolzen 8 durch die Clipverbindung 12 nicht behindert wird. Dadurch entsteht mit Hilfe der Clipverbindung 12 die Möglichkeit, daß die Mutter 10 verliersicher mit dem Fahrpedalmodul 2 verbunden werden kann, bevor das Fahrpedalmodul 2 an der Karosserie 6 befestigt wird. Nach dem Verschrauben hält die Mutter 10 über die Haltefläche 14 das Fahrpedalmodul 2 gegen die Karosserie 6.

Die Mutter 10 hat ein Innengewinde 20 und der Bolzen 8 trägt ein Außengewinde 22.

Das Außengewinde 22 hat einen Außendurchmesser d und einen Kerndurchmesser d1. Wie in der Figur 4 angedeutet, ist der Außendurchmesser d des Bolzens 8 der Durchmesser des imaginären Zylinders, der koaxial zum Außengewinde 22 liegt, und bei dem die Mantellinien die Gewindespitzen des Außengewindes 22 berühren. Der Kerndurchmesser d1 des Außengewindes 22 ist der Durchmesser des imaginären Zylinders, der koaxial zum Außengewinde 22 liegt, und bei dem die Mantellinien den Gewindegrund des Außengewindes 22 berühren.

Bevor die Mutter 10 und der Bolzen 8 zusammengeschraubt werden, hat das Innengewinde 20 der Mutter 10 einen Außendurchmesser D und einen Kerndurchmesser D1. Der Außendurchmesser D ist der Durchmesser des imaginären Zylinders, der koaxial zum Innengewinde 20 liegt, und bei dem die Mantellinien den Gewindegrund des Innengewindes 20 berühren; und der Kerndurchmesser D1 ist der Durchmesser des imaginären Zylinders, der koaxial zum Innengewinde 20 liegt, und bei dem die Mantellinien das radial nach innen ragende Ende des Innengewindes 20 berühren. Das Außengewinde 22 des Bolzens 8 hat eine Steigung h, einen Flankenwinkel α und einen Teilflankenwinkel α/2. Das Innengewinde 20 der Mutter 10 hat eine Steigung H und einen Teilflankenwinkel α/2. Die Steigung H des Innengewindes 20 ist gleich groß wie die Steigung h des Außengewindes 22, und der Teilflankenwinkel α/2 des Innengewindes 20 ist gleich groß wie der Teilflankenwinkel α/2 des Außengewindes 22.

Die Figur 4 zeigt das Profil des Innengewindes 20 im Achsschnitt vor dem Zusammenschrauben mit ausgezogenen Linien und zusätzlich ist das Profil des Innengewindes 20 nach dem Zusammenschrauben mit gestrichelter Linie angedeutet.

Vor dem Zusammenschrauben ist der Außendurchmesser D des Innengewindes 20 deutlich kleiner als der Außendurchmesser d des Außengewindes 22, und der Kerndurchmesser D1 des Innengewindes 20 ist deutlich größer als der Kerndurchmesser d1 des Außengewindes 22. Weil die Steigungen H und h der beiden Gewinde 20 und 22 gleich sind, und weil auch die Teilflankenwinkel α/2 gleich sind, wird das Zusammenschrauben wesentlich erleichtert. Beim Hineinschrauben des Bolzens 8 in die Mutter 10 bzw. beim Aufschrauben der Mutter 10 auf den Bolzen 8 schneiden die Gewindespitzen des Außengewindes 22 in den Gewindegrund des Innengewindes 20. Die Gewindespitzen des Bolzens 8 verdrängen während des Verschraubens Material aus dem Bereich des Gewindegrunds des Innengewindes 20. Weil der ursprüngliche Kerndurchmesser D1 der Mutter 10 deutlich größer ist als der Kerndurchmesser d1 des Bolzens 8, gibt es zwischen den Kerndurchmessern D1 und d1 einen Zwischenraum, in den das aus dem Gewindegrund des Innengewindes 20 verdrängte Material während des Verschraubens hineingedrängt werden kann. Dieser Zwischenraum sollte so reichlich bemessen sein, daß für das verdrängte Material genügend Aufnahmeraum zur Verfügung steht, um während des Verschraubens ein Blockieren bzw. ein Festfressen zu vermeiden. Weil die Mutter 10 insgesamt oder zumindest im Bereich des Innengewindes 20 aus einem Material besteht, das sich wesentlich leichter plastisch umformen läßt als das Material des Bolzens 8 im Bereich des Außengewindes 22, wird das Innengewinde 20 verformt und die Form des Außengewindes 22 bleibt im wesentlichen unverändert. Es wird vorgeschlagen, die Mutter 10 aus Kunststoff zu fertigen und für den Bolzen 8 Metall zu verwenden.

Beim Zusammenschrauben erfolgt nicht nur eine plastische Verformung, sondern auch eine elastische Verformung der Mutter 10. Dies ergibt eine radiale Spannung zwischen der Mutter 10 und dem Bolzen 8, die ein ungewolltes Lösen der beiden Teile 8 und 10 auf Dauer sicher verhindert.

Der Außendurchmesser D des Innengewindes 20 ist so ausreichend groß, daß beim Zusammenschrauben nicht zu viel Material verdrängt werden muß, um eine zu große Wärmeentwicklung zu vermeiden, damit keine Schädigung des Materials der Mutter 10 und keine Schädigung und keine plastische Verformung der Gewindespitzen des Außengewindes 22 des Bolzens 8 befürchtet werden muß. Ferner sollte der Außendurchmesser D des Innengewindes 20 ausreichend groß bemessen sein, um das Drehmoment beim Zusammenschrauben der beiden Teile 8 und 10 ausreichend klein halten zu können, damit, sobald der Zusammenschraubvorgang beendet ist, ein deutlicher Anstieg des Drehmoments auftritt, was mit entsprechenden Drehmomenet-Sensoren erfaßbar ist, damit der Schraubvorgang automatisch rechtzeitig beendet werden kann. Der Außendurchmesser D des Innengewindes 20 sollte also so ausreichend groß sein, daß das Drehmoment während des Zusammenschraubvorgangs deutlich kleiner ist als ein Überdrehmoment der Schraubverbindung. Das Überdrehmoment ist das Drehmoment bei dem eine Schädigung der Schraubverbindung eintritt. Es ist also leicht möglich, den Zusammenschraubvorgang so durchzuführen, daß das unerwünschte Überdrehmoment mit sicherem Abstand vermieden wird. Ein weiterer Grund für das Innengewinde 20 mit ausreichend großem Außendurchmesser D ist, daß der Schraubvorgang mit möglichst hoher Schrauberdrehzahl erfolgen kann.

## Patentansprüche

1. Schraubverbindung (4) für ein Fahrpedalmodul (2) eines Kraftfahrzeugs, wobei das Fahrpedalmodul (2) mindestens ein fußbetätigbares Pedal (3) umfaßt, mit einem an einer Karosserie (6) des Kraftfahrzeugs gehaltenen Bolzen (8) mit einem Außengewinde (22) und mit einer an dem Fahrpedalmodul (2) gehaltenen Mutter (10) mit einem Innengewinde (20), wobei das Innengewinde (20) der Mutter (10) mit dem Außengewinde (22) des Bolzens (8) verschraubt ist, **dadurch gekennzeichnet, daß** für die Mutter (10) mindestens im Bereich des Innengewindes (20) ein Werkstoff verwendet ist, der weicher ist als ein für den Bolzen (8) mindestens im Bereich des Außengewindes (22) verwendeter Werkstoff, und daß vor dem Verschrauben der Mutter (10) mit dem Bolzen (8) das Innengewinde (20) der Mutter (10) einen Außendurchmesser (D) hat, der kleiner ist als ein Außendurchmesser (d) des Außengewindes (22) des Bolzens (8) und das Innengewinde (20) der Mutter (10) auf das Außengewinde (22) des Bolzens (8) abgestimmt ist.

2. Schraubverbindung (4) für ein Fahrpedalmodul eines Kraftfahrzeugs nach Anspruch 1, **dadurch gekennzeichnet, daß** die Mutter (10) vor einem Anbringen des Fahrpedalmoduls (2) an der Karosserie (6) über eine Clipverbindung (12) mit dem Fahrpedalmodul (2) verbunden ist.

3. Schraubverbindung (4) für ein Fahrpedalmodul (2) eines Kraftfahrzeugs, wobei das Fahrpedalmodul (2) mindestens ein fußbetätigbares Pedal (3) umfaßt, mit einer an einer Karosserie (6) des Kraftfahrzeugs gehaltenen Mutter (10) mit einem Innengewinde (20) und mit einem an dem Fahrpedalmodul (2) gehaltenen Bolzen (8) mit einem Außengewinde (22), wobei das Innengewinde (20) der Mutter (10) mit dem Außengewinde (22) des Bolzens (8) verschraubt ist, **dadurch gekennzeichnet, daß** für die Mutter (10) mindestens im Bereich des Innengewindes (20) ein Werkstoff verwendet ist, der weicher ist als ein für den Bolzen (8) mindestens im Bereich des Außengewindes (22) verwendeter Werkstoff, und daß vor dem Verschrauben der Mutter (10) mit dem Bolzen (8) das Innengewinde (20) der Mutter (10) einen Außendurchmesser (D) hat, der kleiner ist als ein Außendurchmesser (d) des Außengewindes (22) des Bolzens (8) und das Innengewinde (20) der Mutter (10) auf das Außengewinde (22) des Bolzens (8) abgestimmt ist.

4. Schraubverbindung (4) für ein Fahrpedalmodul (2) eines Kraftfahrzeugs nach einem der vorhergehenden Ansprüche, **dadurch gekennzeichnet, daß** beim Verschrauben der Mutter (10) mit dem Bolzen (8) das Außengewinde (22) des Bolzens (8) im Bereich des Außendurchmessers (D) der Mutter (10) Werkstoff verdrängt, wobei vor dem Verschrauben der Mutter (10) mit dem Bolzen (8) das Innengewinde (20) der Mutter (10) einen ursprünglichen Kerndurchmesser (D1) hat, der größer ist als ein Kerndurchmesser (d1) des Außengewindes (22) des Bolzens (8), so daß mindestens ein Teil des verdrängten Werkstoffs in einem vor dem Verschrauben zwischen dem ursprünglichen Kerndurchmesser (D1) der Mutter (10) und dem Kerndurchmesser (d1) des Bolzens (8) vorhandenen Bereich aufgenommen wird.

5. Schraubverbindung (4) für ein Fahrpedalmodul (2) eines Kraftfahrzeugs nach einem der vorhergehenden Ansprüche, **dadurch gekennzeichnet, daß** der Bolzen (8) aus Metall und die Mutter (10) aus Kunststoff besteht.

## Claims

1. Screw connection (4) for an accelerator pedal module (2) of a motor vehicle, the accelerator pedal module (2) comprising at least one foot-actuable pedal (3), having a bolt (8) with an external thread (22) held on a body (6) of the motor vehicle, and having a nut (10) with an internal thread (20) held on the accelerator pedal module (2), the internal thread (20) of the nut (10) being screwed to the external thread (22) of the bolt (8), **characterized in that** a material is used for the nut (10), at least in the region of the internal thread (20), which is softer than a material used for the bolt (8), at least in the region of the external thread (22), and **in that** before the nut (10) is screwed to the bolt (8) the internal thread (20) of the nut (10) has an outside diameter (D) which is smaller than an outside diameter (d) of the external thread (22) of the bolt (8), and the internal thread (20) of the nut (10) is matched to the external thread (22) of the bolt (8).

2. Screw connection (4) for an accelerator pedal module of a motor vehicle according to Claim 1, **characterized in that** the nut (10) is connected to the accelerator pedal module (2) via a clip connection (12) before the accelerator pedal module (2) is fixed on the vehicle body (6).

3. Screw connection (4) for an accelerator pedal module (2) of a motor vehicle, the accelerator pedal module (2) comprising at least one foot-actuable pedal (3), having a nut (10) with an internal thread (20) held on a body (6) of the motor vehicle, and having a bolt (8) with an external thread (22) held on the accelerator pedal module (2), the internal thread (20) of the nut (10) being screwed to the external thread (22) of the bolt (8), **characterized in that** a material is used for the nut (10), at least in the region of the internal thread (20), which is softer than a material used for the bolt (8), at least in the region of the external thread (22), and **in that** before the nut (10) is screwed to the bolt (8) the. internal thread (20) of the nut (10) has an outside diameter (D) which is smaller than an outside diameter (d) of the external thread (22) of the bolt (8), and the internal thread (20) of the nut (10) is matched to the external thread (22) of the bolt (8).

4. Screw connection (4) for an accelerator pedal module (2) of a motor vehicle according to one of the preceding claims, **characterized in that** when the nut (10) is screwed to the bolt (8) the external thread (22) of the bolt (8) displaces material in the region of the outside diameter (D) of the nut (10), the internal thread (20) of the nut (10) having, before the nut (10) is screwed to the bolt (8), an original core diameter (D1) which is larger than a core diameter (dl) of the external thread (22) of the bolt (8), with the result that at least part of the displaced material is received in a region which exists, before the screwing takes place, between the original core diameter (D1) of the nut (10) and the core diameter (d1) of the bolt (8).

5. Screw connection (4) for an accelerator pedal module (2) of a motor vehicle according to one of the preceding claims, **characterized in that** the bolt (8) consists of metal and the nut (10) consists of plastic.

## Revendications

1. Liaison vissée (4) pour un module de pédale d'accélérateur (2) d'un véhicule automobile,
le module de pédale d'accélérateur (2) comportant au moins une pédale (3) actionnée au pied, un boulon (8) fixé à la carrosserie (6) du véhicule, ce boulon ayant un filetage extérieur (22) et un écrou (10) tenu au module de pédale d'accélérateur (2) avec un filetage inténieur (20), le filetage intérieur (20) de l'écrou (10) se vissant sur le filetage extérieur (22) du boulon (8),
**caractérisée en ce que**
l'écrou (10) est réalisé en un matériau au moins au niveau du filetage intérieur (20) qui est plus souple que le matériau utilisé pour le boulon fileté (8) au moins au niveau de son filetage extérieur (22) et
avant de visser l'écrou (10) sur le boulon (8), le filetage intérieur (20) de l'écrou (10) a un diamètre extérieur (D) inférieur au diamètre extérieur (d) du filetage extérieur (22) du boulon (8) et le filetage intérieur (20) de l'écrou (10) est accordé sur le filetage extérieur (22) du boulon (8).

2. Liaison vissée (4) pour un module de pédale d'accélérateur d'un véhicule automobile selon la revendication 1,
**caractérisée en ce que**
l'écrou (10) est relié par une liaison clipsée (12) au module de pédale d'accélérateur (2) avant que le module de pédale d'accélérateur (2) ne soit fixé à la carrosserie.

3. Liaison vissée (4) pour un module de pédale d'accélérateur (2) d'un véhicule automobile, le module de pédale d'accélérateur (2) comportant au moins une pédale actionnée au pied (3), un écrou (10) fixé à la carrosserie (6) du véhicule, cet écrou ayant un filetage intérieur (20) et un boulon (8) tenu sur le module de pédale d'accélérateur (2) avec un filetage extérieur (22), le filetage intérieur (20) de l'écrou (10) étant vissé sur le filetage extérieur (22) du boulon (8),
**caractérisée en ce que**
pour l'écrou (10), au moins au niveau du filetage intérieur (20), on utilise un matériau plus souple que le matériau utilisé pour le boulon (8) au moins au niveau de son filetage extérieur (22), et
avant de visser l'écrou (10) sur le boulon (8), le filetage intérieur (20) de l'écrou (10) a un diamètre extérieur (D) inférieur au diamètre extérieur (d) du filetage extérieur (22) du boulon (8), et le filetage intérieur (20) de l'écrou (10) est accordé sur le filetage extérieur (22) du boulon (8).

4. Liaison vissée (4) pour un module de pédale d'accélérateur (2) d'un véhicule automobile selon l'une quelconque des revendications précédentes,
**caractérisée en ce qu'**
en vissant l'écrou (10) sur le boulon (8), le filetage extérieur (22) du goujon (8) refoule la matière de l'écrou (10) au niveau du diamètre extérieur (D), et avant de visser l'écrou (10) sur le boulon (8), le filetage intérieur (20) de l'écrou (10) a un diamètre de base (D1), d'origine plus grand que le diamètre de base (d1) du filetage extérieur (22) du goujon (8) de façon qu'au moins une partie de la matière refoulée soit reçue dans la zone existant avant le vissage, entre le diamètre de base d'origine (D1) de l'écrou (10) et le diamètre de base (d1) du boulon (8).

5. Liaison vissée (4) pour un module de pédale d'accélérateur (2) d'un véhicule automobile selon l'une quelconque des revendications précédentes,
**caractérisée en ce que**
le boulon (8) est en métal et l'écrou (10) en matière plastique.
